# EUROPÄISCHE PATENTSCHRIFT

(11) **EP 1 110 809 B1**
(45) Veröffentlichungstag und Bekanntmachung des Hinweises auf die Patenterteilung: **17.05.2006**
(21) Anmeldenummer: 00126031.4
(22) Anmeldetag: 29.11.2000
(51) Int. Cl.: B60N 2/44, B60N 2/66

(54) **Fahrzeugsitz, insbesondere Kraftfahrzeugsitz**
Vehicle seat, especially motor vehicle seat
Siège de véhicule, en particulier siège d'automobile

(30) Priorität: 23.12.1999 DE 19962637; 21.09.2000 DE 10046743
(43) Veröffentlichungstag der Anmeldung: 27.06.2001
(73) Patentinhaber: Recaro GmbH & Co. KG, 73230 Kirchheim/Teck (DE)
(72) Erfinder: Karschin, Kurt, 73230 Kirchheim/Teck (DE); Bertenburg, Peter, 89275 Elchingen (DE)
(74) Vertreter: Patentanwälte Hosenthien-Held und Dr. Held

(56) Entgegenhaltungen:
- EP-A- 0 308 374
- EP-A- 0 328 137
- DE-U- 8 620 922
- US-A- 5 076 643

## Beschreibung

Die Erfindung betrifft einen Fahrzeugsitz, insbesondere einen Kraftfahrzeugsitz, mit den Merkmalen des Oberbegriffs des Anspruches 1.

Fahrzeugsitze werden in der Regel als Zulieferteile in die Fahrzeuge eingebaut. Um einerseits eine Anpassungsmöglichkeit an das Fahrzeug zu haben, beispielsweise auch an Sicherheitseinrichtungen, wie Seitenairbagmodule oder Gurtstraffer, und andererseits den Transport bei der Zulieferung kostengünstig zu gestalten, ist vorgeschlagen worden, den Fahrzeugsitz modular aufzubauen. Der Fahrzeugsitz besteht dann beispielsweise aus einem einstellbaren Unterbau, einer gepolsterten Sitzschale und einer gepolsterten Rückenlehne. Diese Teile des Fahrzeugsitzes können dann jeweils in etwas größeren Serien hergestellt werden und sind bei mehreren Fahrzeugtypen einsetzbar.

In der DE 86 20 922 U1 ist ein Fahrzeugsitz der eingangs genannten Art beschrieben, bei welchem ein Tragrahmen und als Modul ein Befestigungs-Formrahmen vorgesehen ist, welcher mittels Schnellbefestigungselementen am Tragrahmen angebringbar ist und mittels welchem die Polsterung am Tragrahmen befestigt wird. Ursprünglich nicht vorgesehene Hilfseinrichtungen können mittels des Befestigungs-Formrahmens nachträglich eingebaut werden.

Der Erfindung liegt die Aufgabe zu Grunde, einen Fahrzeugsitz der eingangs genannten Art zu verbessern. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Mittels des innerhalb des vom Rahmen umschlossenen Bauraumes angeordneten Moduls kann der gleiche Rahmen zusätzlich mit verschiedenen Baugruppen versehen werden, ohne dass die strukturellen Eigenschaften des Rahmens und die Anbringung des Polsters und/oder des Polsterträgers am Rahmen betroffen sind oder beeinträchtigt werden. Der Rahmen kann daher als Großserienteil hergestellt werden. Das gleiche Modul kann auch bei mehreren, bereits auf dem Markt befindlichen Rahmen eingesetzt werden. Der Aufwand bei einer Neuentwicklung, insbesondere an Crashtests, verringert sich, so dass die Herstellung des Rahmens und damit des Fahrzeugsitzes kostengünstiger wird. Die Baugruppen können in Abhängigkeit der Herstellervorgaben oder der individuellen Wünsche des späteren Sitzbenutzers vorgesehen werden, beispielsweise um den Sitzkomfort zu verbessern. Die Erfindung kann bei der Rückenlehne und/oder beim Sitzteil eingesetzt werden. Im Falle einer Rückenlehne sind solche am Modul anbringbaren Baugruppen Lordosenstützen, Seitenwangen, Schulterstützen und/oder Sitzklimaanlagen sein, die jeweils einzeln oder in beliebiger Kombination angebracht werden können, wofür das Modul vorzugsweise verschiedene Befestigungselemente aufweist.

Um die Crasheigenschaften des Rahmens nicht zu ändern, ist das Modul unter Verwendung bereits vorhandener Befestigungsmöglichkeiten am Rahmen so angebracht, dass das Material des Rahmens ungeschwächt bleibt. Um das gleiche Modul bei verschiedenen Rahmen einsetzen zu können, ist das Modul mittels rahmenangepasster Adapter am Rahmen angebracht d.h. der oder die Adapter sind in der Regel rahmenspezifisch, während das Modul für verschiedene Rahmen vorzugsweise gleich ausgebildet ist. Diese Adapter sind so ausgebildet, dass sie im Crashfall Energie aufnehmen können, sich dadurch verformen oder die Energie auf andere Weise dissipieren.

Durch eine Verriegelung zwischen dem Modul und dem Adapter und/oder zwischen dem Adapter und dem Rahmen steht eine schnell schließende Verbindung zur Verfügung, was die Herstellungszeit verkürzt. Vorzugsweise ist die Verriegelung auch wieder lösbar, um gegebenenfalls Montagefehler zu korrigieren. Um die Crasheigenschaften des Rahmens nicht zu ändern, ist der Adapter am Rahmen so angebracht, dass das Material des Rahmens ungeschwächt bleibt, beispielsweise formschlüssig und/oder mit Schraub-, Niet- und/oder Steckverbindungen in bereits vorhandenen Öffnungen des Rahmens ohne Schweißverbindungen mit dem Rahmen. Eine Ausbildung als Draht ist dabei vorteilhaft, wobei dann vorzugsweise speziell geformte Abschnitte und/oder am Draht angeschweißte Ösen, Muttern oder andere Befestigungselemente vorgesehen sind.

In einer bevorzugten Ausführungsform wird wenigstens ein länglicher Abschnitt des Adapters von wenigstens einer hohlen Führung des Moduls aufgenommen, wobei die Seitenwände der Führung den Adapterabschnitt vorzugsweise in wenigstens zwei Richtungen halten. Ein bewegliches Rastelement verriegelt den Adapterabschnitt vorzugsweise und hält ihn in der dritten Richtung fest, gegebenenfalls gegenüber einem Anschlag. Diese Verriegelung wird vorzugsweise nach einer Relativverschiebung von Adapterabschnitt und Führung in Längsrichtung aktiviert, beispielsweise indem das Rastelement federbelastet ist und eine Anlaufschräge aufweist, über welche der Adapterabschnitt nach der Relativverschiebung bei Anlage an das Rastelement letzteres entgegen der Federbelastung bewegt.

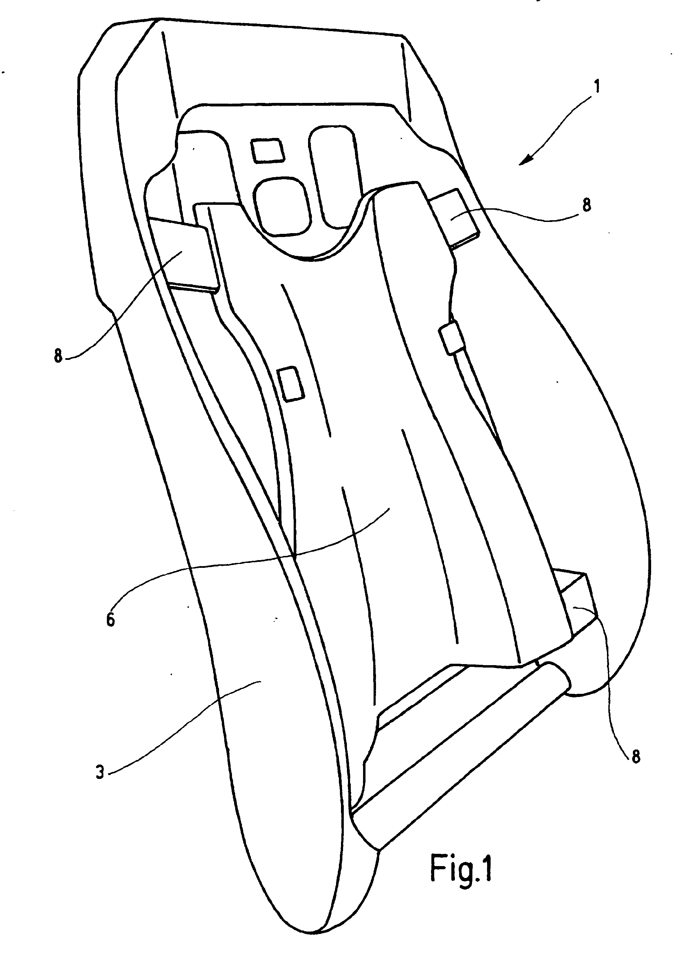

Im folgenden ist die Erfindung anhand zweier in der Zeichnung dargestellten Ausführungsbeispiele näher erläutert. Es zeigen
- Fig. 1: eine perspektivische Ansicht einer Lehnenstruktur mit einem Grundmodul gemäß einem ersten Ausführungsbeispiel,

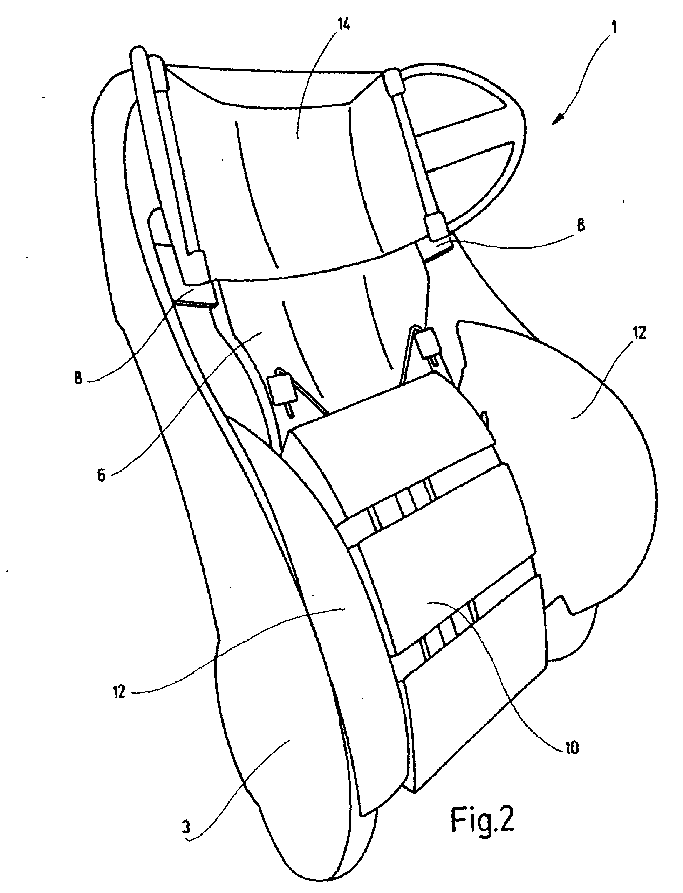

- Fig. 2: eine Darstellung wie in Fig. 1, wobei am Grundmodul verschiedene Baugruppen angebracht sind,

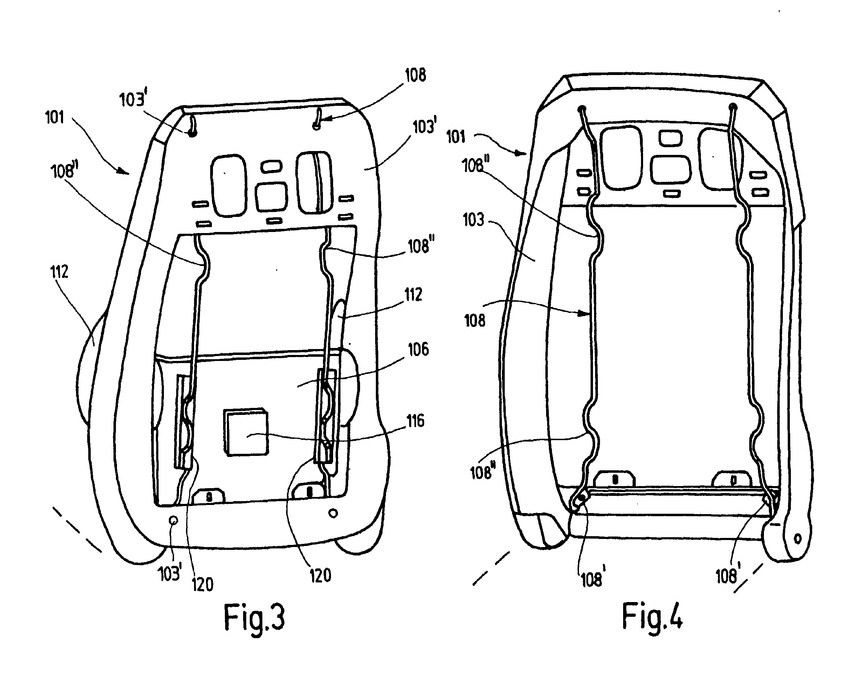

- Fig. 3: eine perspektivische Rückansicht einer Lehnenstruktur mit einem Grundmodul gemäß einem zweiten Ausführungsbeispiel,
- Fig. 4: eine perspektivische Vorderansicht dieser Lehnenstruktur ohne Grundmodul,

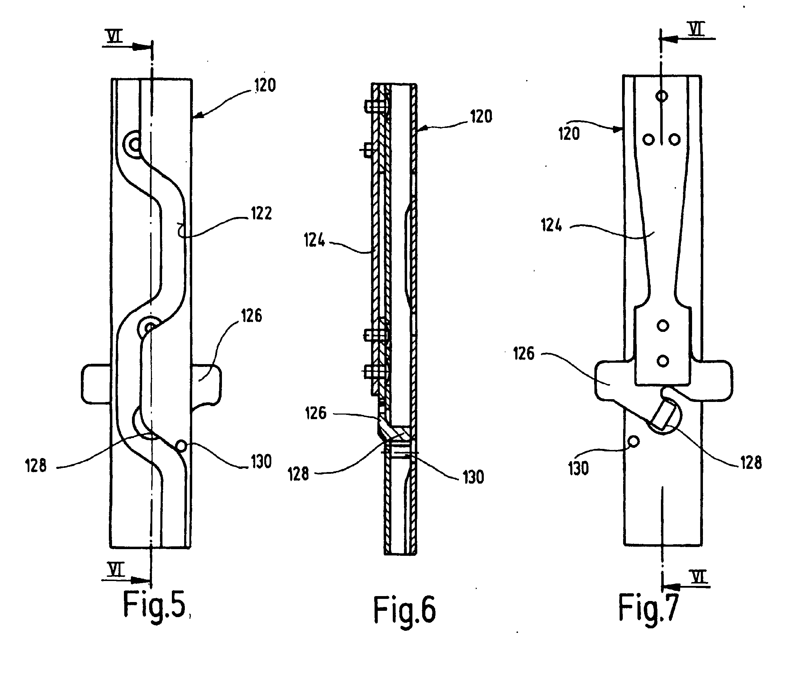

- Fig. 5: eine Ansicht einer Führung dieses Grundmoduls auf der vom Grundmodul abgewandten Seite,
- Fig. 6: einen Schnitt durch die Führung entlang der Linie VI-VI in Fig. 5 und 7,
- Fig. 7: eine Ansicht der Führung auf der dem Grundmodul zugewandten Seite,
- Fig. 8: einen Schnitt durch die Führung entlang der Linie VIII-VIII in Fig. 9,
- Fig. 9: einen Schnitt durch die Führung entlang der Linie IX-IX in Fig. 8,
- Fig. 10: einen Schnitt durch die Führung entlang der Linie X-X in Fig. 11, und
- Fig. 11: einen Schnitt durch die Führung entlang der Linie XI-XI in Fig. 10.

Im ersten Ausführungsbeispiel weist eine Rückenlehne 1 eines Fahrzeugsitzes, der als Vordersitz eines Kraftfahrzeuges ausgebildet ist, einen starren Lehnenrahmen 3 auf. Der Lehnenrahmen 3 ist im Hinblick auf einen Crashfall so ausgelegt, daß er alleine die auf die Rückenlehne 1 wirkenden Kräfte aufnehmen und gegebenenfalls weiterleiten kann. Der Lehnenrahmen 3 umschließt einen Bauraum, innerhalb dessen ein Grundmodul 6 angeordnet ist. Das Grundmodul 6 hat eine flache, näherungsweise rechteckige Form und wird beispielsweise als Kunststoffspritzgußteil oder Leichtmetalldruckgußteil hergestellt. Das Grundmodul 6 ersetzt ein gegebenenfalls als Zusatz für den Lehnenrahmen 3 vorgesehenes Lehnenblech.

An jeder der vier Ecken des Grundmoduls 6 ist ein Adapter 8, vorzugsweise aus Stahlblech, befestigt. Jeder der beispielsweise winkelförmigen Adapter 8 ist auch am Lehnenrahmen 3 befestigt, beispielsweise mittels einer Schraub- oder Nietverbindung. Um die Crasheigenschaften des Lehnenrahmens 3 nicht zu beeinflussen, werden die am Lehnenrahmen 3 vorhandenen Befestigungsmöglichkeiten (Bohrungen, Langlöcher, Sicken o. dgl.) genutzt, ohne durch weitere Bohrungen oder dergleichen das Material des Lehnenrahmens 3 zu schwächen. Die Adapter 8 werden vorzugsweise so ausgebildet, daß sie im Crashfall, insbesondere bei einem Heckcrash, Energie aufnehmen und dissipieren können, insbesondere durch Verformung.

Am Grundmodul 6 sind mehrere Befestigungselemente vorgesehen. An diesen Befestigungselementen sind verschiedene Baugruppen anbringbar, beispielsweise eine (Zwei-Wege- oder Vier-Wege-) Lordosenstütze 10, zwei Seitenwangen 12 oder seitliche Stützbügel, eine Schulterstütze 14 mit seitlichen Wangen, ein Ventilator zur Sitzklimatisierung oder eine Sitzklimaanlage. Die genannten Baugruppen können einzeln oder in Kombination am Grundmodul 6 befestigt werden. Als Befestigungselemente sind beispielsweise glatte Bohrungen, Gewindebohrungen, röhrenförmige oder laschenförmige Ausstellungen zum Einhängen von Bügeln vorgesehen.

Der Lehnenrahmen 3 mit dem Grundmodul 6 samt angebrachten Baugruppen ist auf der zum Sitzbenutzer gewandten Seite mit einer Polsterung versehen. Diese gepolsterte Lehnenstruktur ist dann mit einem gemeinsamen Bezug überzogen, der aus zusammengenähten Teilstücken besteht.

Das zweite Ausführungsbeispiel gleicht in vielem dem ersten Ausführungsbeispiel, weshalb gleiche und gleich wirkende Bauteile um 100 höhere Bezugszeichen tragen. Eine Rückenlehne 101 eines Fahrzeugsitzes, der beispielsweise als Vordersitz eines Kraftfahrzeuges ausgebildet ist, weist einen starren Lehnenrahmen 103 auf. Für die Richtungsangaben wird im folgenden von einer nahezu vertikalen Ausrichtung des Lehnenrahmens 103 (z-Richtung) bei üblicher Anordnung des Fahrzeugsitzes in Fahrtrichtung (x-Richtung) ausgegangen. Der handelsüblich ausgebildete Lehnenrahmen 103 ist im Hinblick auf einen Crashfall so ausgelegt, daß er alleine die auf die Rückenlehne 101 wirkenden Kräfte aufnehmen und gegebenenfalls weiterleiten kann.

In dem durch den Lehnenrahmen 103 definierten Bauraum, also in der y-z-Ebene, ist für die Anbringung eines später beschriebenen Grundmoduls 106 ein Adapterdraht 108 angeordnet, der nach oben geöffnet, näherungsweise U-förmig gebogen ist. In den sich dadurch ergebenden Eckabschnitte des Adapterdrahtes 108 sind Muttern 108' angeschweißt, welche im Bereich der unteren Ecken des Lehnenrahmens 103 mittels dort vorhandener Öffnungen 103' fest mit dem Lehnenrahmen 103 verschraubt sind. Die beiden Endabschnitte des Adapterdrahtes 108 sind von vorne her durch weitere, bereits vorhandene Öffnungen 103' im Bereich der oberen Ecken des Lehnenrahmens 103 gesteckt und auf der Rückseite des Lehnenrahmens 103 umgebogen. Der rahmenangepasste Adapterdraht 108 ist durch diese verschiedenen Maßnahmen formschlüssig mit dem Lehnenrahmen 103 verbunden, ohne dessen Material zu schwächen.

An seinen beiden näherungsweise vertikal verlaufenden Schenkeln weist der Adapterdraht 108 jeweils zwei Wellenabschnitte 108" auf. In jedem Wellenabschnitt 108" ist der Adapterdraht 108 mit geringer Amplitude in je einer Halbwelle einmal seitlich nach außen und anschließend einmal seitlich nach innen gebogen. Mittels dieser Wellenabschnitte 108" kann der Adapterdraht 108 unter anderem im Crashfall Energie aufnehmen und dissipieren. Vorrangig jedoch dienen die Wellenabschnitte 108" zur Befestigung des Grundmoduls 106. Dieses Grundmodul 106, welches gegebenenfalls ein Lehnenblech ersetzt, dient wiederum der Befestigung verschiedener Baugruppen, beispielsweise einer (Zwei-Wege- oder Vier-Wege-) Lordosenstütze, zwei Seitenwangen 112 oder zwei seitliche Stützbügel, einer Schulterstütze mit seitlichen Wangen, einem Ventilator 116 zur Sitzklimatisierung oder einer Sitzklimaanlage, welche einzeln oder in Kombination mittels geeigneter Befestigungselemente am Grundmodul 106 befestigt werden.

Das innerhalb der durch den Lehnenrahmen 103 definierten Ebene angeordnete Grundmodul 106 weist auf seiner nach hinten weisenden Seite zwei Führungen 120 auf. Die Führungen 120 sind parallel zu den näherungsweise vertikal (z-Richtung) verlaufenden Schenkeln des Adapterdrahtes 108 mit gleichem Abstand in Querrichtung (y-Richtung) angeordnet. Jede Führung 120 ist als länglicher Hohlkasten ausgebildet, wodurch Seitenwände und ein Innenraum definiert sind. Die Führung 120 weist in der vom Grundmodul 106 abgewandten Seitenwand eine wellenförmige Aussparung 122 auf. Die wellenförmige Aussparung 122 entspricht in ihrer Form den Wellenabschnitten 108" des Adapterdrahtes 108.

Auf der dem Grundmodul 106 zugewandten Seitenwand ist am oberen Ende der Führung 120 auf der Außenseite eine Blattfeder 124 angebracht, vorzugsweise mit einem an der Führung 120 angeschweißten Blech vernietet. Am unteren Ende der Blattfeder 124 ist eine Rastnasenplatte 126 angenietet, welche seitlich etwas über die Führung 120 übersteht und welche mit einer angeformten Rastnase 128 in x-Richtung etwa mittig in den Innenraum der Führung 120 ragt. Von der Rastnase 128 um einen Durchmesser des Adapterdrahtes 108 entfernt ist im Innenraum der Führung 120 ein bolzenförmiger Anschlag 130 in x-Richtung angeordnet.

Zur Montage der Rückenlehne 101 wird, nachdem der Adapterdraht 108 am Lehnenrahmen 103 befestigt ist, das Grundmodul 106 von vorne her (entgegen der x-Richtung) so auf den Adapterdraht 108 aufgesetzt, daß die wellenförmigen Aussparungen 122 der beiden Führungen 120 auf je einen Wellenabschnitt 108" ausgerichtet sind. Durch eine weitere Bewegung des Grundmoduls 106 entgegen der x-Richtung gelangen die Wellenabschnitte 108" in den Innenraum der jeweiligen Führung 120. Die jeweilige Rastnase 128 ist dabei im Bereich der unteren Halbwelle des Wellenabschnitts 108" angeordnet. Nun wird das Grundmodul 106 nach oben (in z-Richtung) geschoben, wodurch sich der Wellenabschnitt 108" und die wellenförmige Aussparung 122 jeweils nicht mehr decken.

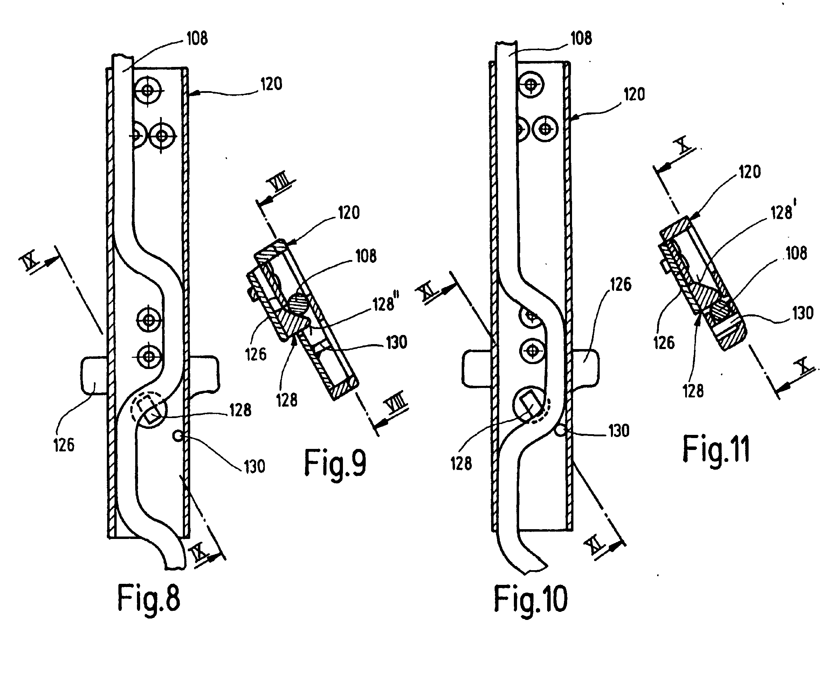

Jede der Rastnasen 128, welche jeweils eine Anlaufschräge 128' aufweist, gelangt schließlich mit dieser Anlaufschräge 128' in Anlage an den Adapterdraht 108, und zwar im Bereich der Mitte des jeweiligen Wellenabschnitts 108". Durch die weitere Bewegung des Grundmoduls 106 wird die Rastnase 128 zunächst über die Anlaufschräge 128' entgegen der Kraft der Blattfeder 124 (in x-Richtung) aus dem Innenraum der Führung 120 bewegt, wie in Fig. 8 und 9 dargestellt, und nach Vorbeiführen am Adapterdraht 108 auf dessen anderer Seite durch die Kraft der Blattfeder 124 wieder in den Innenraum zurückgedrückt. Der Adapterdraht 108 befindet sich nun auf einer Seite in Anlage an eine senkrecht zur Führung (in x-Richtung) verlaufende Rastfläche 128" der Rastnase 128 und auf der anderen Seite in Anlage an den Anschlag 130. Der eingerastete Adapterdraht 108 und die Führung 120 (und damit das Grundmodul 106) sind nun miteinander verriegelt, wie in Fig. 10 und 11 dargestellt. Dabei sorgen die Seitenwände der Führung 120 für den notwendigen Halt in x-Richtung und y-Richtung, während die Rastnase 128 und der Anschlag 130 in z-Richtung sichern.

Sollte bei der Montage ein Fehler bemerkt werden, so kann manuell durch Druck auf die Rastnasenplatte 126 die Rastnase 128 wieder aus dem Innenraum der Führung 120 gezogen werden. Das Grundmodul 106 ist dann wieder relativ zum Adapterdraht 108 beweglich und kann mit umgekehrter Reihenfolge der beschriebenen Montageschritte von diesem wieder entfernt werden. Im fertig montierten Zustand ist der Lehnenrahmen 103 mit dem Grundmodul 106 samt angebrachten Baugruppen auf der zum Sitzbenutzer gewandten Seite mit einer Polsterung versehen. Diese gepolsterte Lehnenstruktur ist dann mit einem gemeinsamen Bezug überzogen, der aus zusammengenähten Teilstücken besteht.

### Bezugszeichenliste

- 1, 101: Rückenlehne
- 3, 103: Lehnenrahmen
- 6, 106: Grundmodul
- 8, 108: Adapter, Adapterdraht
- 10: Lordosenstütze
- 12, 112: Seitenwange
- 14: Schulterstütze
- 103': Öffnung
- 108': Mutter
- 108": Wellenabschnitt
- 116: Ventilator
- 120: Führung
- 122: wellenförmige Aussparung
- 124: Blattfeder
- 126: Rastnasenplatte
- 128: Rastnase
- 128': Anlaufschräge
- 128": Rastfläche
- 130: Anschlag

## Patentansprüche

1. Fahrzeugsitz, insbesondere Kraftfahrzeugsitz, bei dem ein Teil (1; 101) der Sitzstruktur einen Rahmen (3; 103), welcher einen Bauraum umschließt, und ein Modul (6; 106) zur wahlweisen Aufnahme von Baugruppen (10, 12, 14; 112, 116) aufweist, **dadurch gekennzeichnet, dass** an dem handelsüblich ausgebildeten Rahmen (3; 103) bereits Befestigungsmöglichkeiten vorhanden sind, an denen das Modul (6; 106) mittels rahmenangepasster Adapter (8; 108) ohne weitere Schwächung am Rahmen (3; 103) angebracht ist, wobei der oder die Adapter (8; 108) im Crashfall Energie aufnehmen und dissipieren, wobei das Modul (6; 106) innerhalb des vom Rahmen (3; 103) umschlossenen Bauraumes angeordnet ist, und wobei als Baugruppen eine Lordosenstütze (10) und/oder Seitenwangen (12; 112) und/oder eine Schulterstütze (14) und/oder ein Ventilator zur Sitzklimatisierung und/oder eine Sitzklimaanlage vorgesehen sind, welche einzeln oder in beliebiger Kombination am Modul (6; 106) angebracht werden können.

2. Fahrzeugsitz nach Anspruch 1, **dadurch gekennzeichnet, dass** zwischen Modul (106) und Adapter (108) und/oder zwischen Adapter (108) und Rahmen (103) eine Verriegelung (120, 128) vorgesehen ist.

3. Fahrzeugsitz nach Anspruch 2, **dadurch gekennzeichnet, dass** der Adapter (108) als Draht ausgebildet ist, welcher mittels angebrachter Befestigungselemente (108') am Rahmen (103) in vorhandenen Öffnungen (103') angenietet und/oder angeschraubt ist und/oder durch Öffnungen (103') des Rahmens (103) gesteckt ist, um mit dem Rahmen (103) verbunden zu sein.

4. Fahrzeugsitz nach Anspruch 2 oder 3, **dadurch gekennzeichnet, dass** der Adapter (108) wenigstens einen länglichen Abschnitt (108") aufweist, welcher von wenigstens einer hohlen Führung (120) des Moduls (106) aufgenommen wird.

5. Fahrzeugsitz nach Anspruch 4, **dadurch gekennzeichnet, dass** der Adapterabschnitt (108") eine Wellenform aufweist, welche einer wellenförmigen Aussparung (122) in einer Seitenwand der Führung (120) entspricht.

6. Fahrzeugsitz nach Anspruch 4 oder 5, **dadurch gekennzeichnet, dass** die Seitenwände der Führung (120) den Adapterabschnitt (108") in wenigstens zwei Richtungen halten.

7. Fahrzeugsitz nach einem der Ansprüche 4 bis 6, **dadurch gekennzeichnet, dass** innerhalb der Führung (120) ein bewegliches Rastelement (128) vorgesehen ist, welches den Adapterabschnitt (108") verriegelt.

## Claims

1. Vehicle seat, in particular motor vehicle seat, wherein a component (1; 101) of the seat structure has a frame (3; 103), which encloses a structural space, and a module (6; 106) for optionally receiving subassemblies (10, 12, 14; 112, 116), **characterised in that** there are already provided on the conventionally constructed frame (3; 103) fixing possibilities, by means of which the module (6; 106) is fitted to the frame (3, 103) without additional weakening by means of adapters (8; 108) which are adapted to the frame, the adapter(s) (8; 108) receiving and dissipating energy in the event of a crash, the module (6; 106) being arranged inside the structural space enclosed by the frame (3; 103), and a lordosis support (10) and/or side walls (12; 112) and/or a shoulder support (14) and/or a ventilator for climate-control of the seat and/or a climate-control system for the seat being provided as subassemblies which can be fitted to the module (6; 106) individually or in any combination.

2. Vehicle seat according to claim 1, **characterised in that** a locking mechanism (120, 128) is provided between the module (106) and adapter (108) and/or between the adapter (108) and frame (103).

3. Vehicle seat according to claim 2, **characterised in that** the adapter (108) is in the form of a wire which is riveted and/or screwed to the frame (103) in openings (103') provided by means of fitted fixing elements (108') and/or is fitted through openings (103') of the frame (103) in order to be connected to the frame (103).

4. Vehicle seat according to claim 2 or 3, **characterised in that** the adapter (108) has at least an elongate portion (108") which is received by at least a hollow guide (120) of the module (106).

5. Vehicle seat according to claim 4, **characterised in that** the adapter portion (108") is of wave-like form which corresponds to a wave-like recess (122) in a side wall of the guide (120).

6. Vehicle seat according to claim 4 or 5, **characterised in that** the side walls of the guide (120) hold the adapter portion (108") in at least two directions.

7. Vehicle seat according to any one of claims 4 to 6, **characterised in that** a movable latch element (128) which locks the adapter portion (108") is provided within the guide (120).

## Revendications

1. Siège de véhicule, en particulier siège de véhicule automobile, dans lequel une partie (1 ; 101) de la structure de siège présente un cadre (3 ; 103) lequel entoure un espace de structure, et un module (6 ; 106) pour la réception facultative de blocs de structure (10, 12, 14 ; 112, 116), **caractérisé par le fait que**, sur le cadre (3 ; 103) formé de manière usuelle, existent déjà des possibilités de fixation, sur lesquelles le module (6 ; 106) est monté au moyen d'un adaptateur (8 ; 108) ajusté au cadre sans autre affaiblissement sur le cadre (3 ; 103) le ou les adaptateurs (8 ; 108) absorbant et dissipant de l'énergie en cas d'accident, le module (6; 106) étant disposé à l'intérieur de l'espace de structure entouré par le cadre (3 ; 103) et, comme blocs de structure, étant prévus un support de lordose (10), et/ou des joues latérales (12 ; 112), et/ou un support d'épaules (14) et/ou un ventilateur pour la climatisation du siège et/ou une installation de climatisation du siège, lesquels, individuellement ou en n'importe quelle combinaison peuvent être montés sur le module (6 ; 106).

2. Siège de véhicule selon la revendication 1, **caractérisé par le fait qu'**entre le module (106) et l'adaptateur (108) et/ou entre l'adaptateur (108) et le cadre (103) est prévu un dispositif de verrouillage (120, 128).

3. Siège de véhicule selon la revendication 2, **caractérisé par le fait que** l'adaptateur (108) est réalisé sous la forme d'un fil métallique, lequel, au moyen d'éléments de fixation (108') installés, est rivé et/ou vissé sur le cadre (103) dans des ouvertures existantes (103') et/ou est enfoncé à travers des ouvertures (103') du cadre (103) pour être lié avec le cadre (103).

4. Siège de véhicule selon l'une des revendications 2 ou 3, **caractérisé par le fait que** l'adaptateur (108) présente au moins une section oblongue (108") laquelle est reçue par au moins un guide creux (120) du module (106).

5. Siège de véhicule selon la revendication 4, **caractérisé par le fait que** la section d'adaptateur (108'') présente une forme ondulée, laquelle correspond à une ouverture (122) ondulée dans une paroi latérale du guide (120).

6. Siège de véhicule selon l'une des revendications 4 ou 5, **caractérisé par le fait que** les parois latérales du guide (120) maintiennent la section d'adaptateur (108") dans au moins deux directions.

7. Siège de véhicule selon l'une des revendications 4 à 6, **caractérisé par le fait qu'**à l'intérieur du guide (120), un élément d'arrêt mobile (128) est prévu, lequel verrouille la section d'adaptateur (108").
